# EUROPÄISCHE PATENTSCHRIFT

(11) **EP 3 880 148 B1**
(45) Veröffentlichungstag und Bekanntmachung des Hinweises auf die Patenterteilung: **14.12.2022**
(21) Anmeldenummer: 19805571.7
(22) Anmeldetag: 12.11.2019
(51) Int. Cl.: A61H 1/02, B25J 9/04, B25J 17/00, B25J 17/02

(54) **ROBOTERSTRUKTUR UND REHABILITATIONSVORRICHTUNG**
ROBOT STRUCTURE AND REHABILITATION DEVICE
STRUCTURE DE ROBOT ET DISPOSITIF DE RÉÉDUCATION

(30) Priorität: 14.11.2018 DE 102018219447
(43) Veröffentlichungstag der Anmeldung: 22.09.2021
(73) Patentinhaber: KUKA Deutschland GmbH, 86165 Augsburg (DE)
(72) Erfinder: RIEDEL, Martin, 86165 Augsburg (DE)
(74) Vertreter: Oelke, Jochen
(86) Internationale Anmeldenummer: PCT/EP2019/080927
(87) Internationale Veröffentlichungsnummer: WO 2020/099354

(56) Entgegenhaltungen:
- EP-A1- 2 781 317
- JP-A- H08 290 385
- JP-U- H0 373 133
- US-A- 1 551 332

## Beschreibung

Die Erfindung betrifft eine Roboterstruktur, aufweisend mehrere Glieder und diese Glieder miteinander verbindende Gelenke, wobei wenigstens ein Glied dieser Glieder ein erstes Rohrstück umfasst, das eine erste Mantelaußenwand aufweist und ein zweites Rohrstück umfasst, das eine zweite Mantelaußenwand aufweist, wobei das zweite Rohrstück mit seiner Längserstreckung in einem Winkel zur Längserstreckung des ersten Rohrstücks angeordnet ist, derart dass das zweite Rohrstück in zwei gegenüberliegende Rohrausschnitte des ersten Rohrstücks eingesteckt ist und dabei das zweite Rohrstück die erste Mantelaußenwand des ersten Rohrstücks an gegenüberliegenden Seiten durchdringt, wobei das zweite Rohrstück mit dem ersten Rohrstück mittels eines ersten Verbindungselements und eines zweiten Verbindungselements starr verbunden ist. Die Erfindung betrifft außerdem eine Rehabilitationsvorrichtung mit einer solchen Roboterstruktur.

Aus der WO 2015/048688 A1 ist eine Rehabilitationsvorrichtung bekannt, die ausgebildet ist zum Betrieb in Verbindung mit einem der Gliedmaßen eines Benutzers, wobei das betreffende Glied des Benutzers einen Endpunkt aufweist. Die Rehabilitationsvorrichtung umfasst eine Basis, einen Roboterarm, der an der Basis befestigt ist und der einen Endpunkt aufweist, wobei der Roboterarm mindestens zwei aktive Freiheitsgrade relativ zu der Basis aufweist und so konfiguriert ist, dass während die Basis relativ zu einem Benutzer geeignet positioniert ist, der Referenzrahmen des Roboters im Wesentlichen gleichartig wie der Bezugsrahmen des Benutzers ausgerichtet ist. Die Bewegungen des Endpunkts des betreffenden Glieds des Benutzers werden durch Bewegungen des Endpunkts des Roboterarms dabei nachgeahmt.

Die Druckschrift US 1 551 332 A offenbart den Oberbegriff des Anspruchs 1.

Aufgabe der Erfindung ist es, eine allgemein anwendbare Roboterstruktur, insbesondere eine Rehabilitationsvorrichtung bereitzustellen, die trotz kostengünstigen Aufbaus in besonders sicherer Weise betrieben werden kann.

Diese Aufgabe wird erfindungsgemäß gelöst durch eine Roboterstruktur, aufweisend mehrere Glieder und diese Glieder miteinander verbindende Gelenke, wobei wenigstens ein Glied dieser Glieder ein erstes Rohrstück umfasst, das eine erste Mantelaußenwand aufweist und ein zweites Rohrstück umfasst, das eine zweite Mantelaußenwand aufweist, wobei das zweite Rohrstück mit seiner Längserstreckung in einem Winkel zur Längserstreckung des ersten Rohrstücks angeordnet ist, derart dass das zweite Rohrstück in zwei gegenüberliegende Rohrausschnitte des ersten Rohrstücks eingesteckt ist und dabei das zweite Rohrstück die erste Mantelaußenwand des ersten Rohrstücks an gegenüberliegenden Seiten durchdringt, wobei das zweite Rohrstück mit dem ersten Rohrstück mittels eines ersten Verbindungselements und eines zweiten Verbindungselements starr verbunden ist, und dazu das erste Verbindungselement einen ersten Ringabschnitt aufweist, der mit seiner ersten Ringinnenmantelwand an der zweiten Mantelaußenwand des zweiten Rohrstücks bündig anliegt und mit seiner ersten Ringaußenmantelwand an einer ersten Ausschnittskante des einen Rohrausschnitts des ersten Rohrstücks bündig anliegt und das erste Verbindungselement einen sich an den ersten Ringabschnitt anschließenden Laschenabschnitt aufweist, der sich mit seiner Längserstreckung entlang der Längserstreckung des ersten Rohrstücks an dessen erster Mantelaußenwand bündig anliegend erstreckt, und dazu das zweite Verbindungselement einen zweiten Ringabschnitt aufweist, der mit seiner zweiten Ringinnenmantelwand an der zweiten Mantelaußenwand des zweiten Rohrstücks bündig anliegt und mit seiner zweiten Ringaußenmantelwand an einer zweiten Ausschnittskante des anderen Rohrausschnitts des ersten Rohrstücks bündig anliegt und das zweite Verbindungselement einen sich an den zweiten Ringabschnitt anschließenden Zylindermantelabschnitt aufweist, der an einer Innenwand der ersten Rohrstücks bündig anliegt.

Die Roboterstruktur muss nicht notwendiger Weise als eine Rehabilitationsvorrichtung ausgeführt sein. Die erfinderungemäße Roboterstruktur kann generell bei beliebigen Kinematiken mit mehreren Gelenken zum Einsatz kommen. Insbesondere kann die Roboterstruktur in allen an sich bekannten Arten von Roboterkinematiken, wie beispielsweise Industrierobotern verwendet werden. Gleichwohl ist die erfindungsgemäß beschriebene Roboterstruktur in der Bauart als eine Rehabilitationsvorrichtung besonders gut geeignet.

Als Roboterstruktur wird eine Kinematik eines Roboterarms verstanden. Die Roboterstruktur kann insbesondere von einer seriellen Anordnung von abwechselnden Gliedern und Gelenken gebildet werden. Nicht notwendiger Weise müssen dabei sämtliche Gelenke der Roboterstruktur als motorisch angetriebene Gelenke ausgebildet sein. Beispielsweise können ein oder zwei Gelenke unangetrieben d.h. frei drehbar ausgebildet sein, wobei die übrigen Gelenke der Roboterstruktur motorisch angetrieben ausgebildet sind. Wenigstens eines der mehreren Glieder der Roboterstruktur kann erfindungsgemäß ausgebildet sein. Es können demgemäß mehrere oder sogar alle Glieder der Roboterstruktur erfindungsgemäß ausgebildet sein.

Das erste Rohrstück und das zweite Rohrstück können prinzipiell eine beliebige Querschnittsform aufweisen. Vorzugsweise können das erste Rohrstück und/oder das zweite Rohrstück eine kreisförmige Querschnittskontur aufweisen. Demgemäß können die Rohrausschnitte der Querschnittskontur von erstem Rohrstück und/oder zweitem Rohrstück entsprechend kreisförmig ausgebildet sein.

Der Laschenabschnitt des ersten Verbindungselements kann einen Vorsprung des ersten Ringabschnitts bilden, der sich stegförmig in radialer Richtung von dem ersten Ringabschnitt wegerstreckt und zwar parallel zur Längserstreckung des ersten Rohrstücks.

Das zweite Rohrstück kann mit seiner Längserstreckung in einem rechten Winkel zur Längserstreckung des ersten Rohrstücks in das erste Rohrstück eingesetzt sein, so dass das zweite Rohrstück senkrecht zu dem ersten Rohrstück angeordnet ist.

Die Längserstreckung des ersten Rohrstücks bildet somit mit der Längserstreckung des zweiten Rohrstücks einen rechten Winkel, d.h. einen Winkel von zumindest annähernd oder genau 90 Grad.

Das erste Verbindungselement und/oder das zweite Verbindungselement können jeweils als ein einstückiger Kunststoffkörper, insbesondere als ein Kunststoff-Spritzgußkörper oder als ein 3D-Druck-Kunststoffkörper ausgebildet sein. Der Kunststoffkörper kann beispielsweise aus Polyethylen, Polypropylen oder Polyamid, insbesondere faserverstärktem Polyamid, wie beispielsweise PA-GF hergestellt sein.

Das erste Verbindungselement kann dadurch mit dem ersten Rohrstück verbunden sein, dass eine dem ersten Rohrstück zuweisende Innenfläche des Laschenabschnitts des ersten Verbindungselements mit der ersten Mantelaußenwand des ersten Rohrstücks verklebt oder stoffschlüssig verbunden ist.

Das zweite Verbindungselement kann dadurch mit dem ersten Rohrstück verbunden sein, dass der dem ersten Rohrstück zuweisende Zylindermantelabschnitt des zweiten Verbindungselements mit der Innenwand des ersten Rohrstücks verklebt ist.

Das erste Verbindungselement kann dadurch mit dem zweiten Rohrstück verbunden sein, dass die dem zweiten Rohrstück zuweisende erste Ringinnenmantelwand des ersten Ringabschnitts des ersten Verbindungselements mit der zweiten Mantelaußenwand des zweiten Rohrstücks verklebt oder verpresst ist.

Das zweite Verbindungselement kann dadurch mit dem zweiten Rohrstück verbunden sein, dass die dem zweiten Rohrstück zuweisende zweite Ringinnenmantelwand des zweiten Ringabschnitts des zweiten Verbindungselements mit der zweiten Mantelaußenwand des zweiten Rohrstücks verklebt oder verpresst ist.

In allen Ausführungsformen kann der Laschenabschnitt des ersten Verbindungselements sich in Längserstreckung des ersten Rohrstücks über eine Mindestlänge erstrecken, die gleich oder größer ist, als die Breite, insbesondere als der Durchmesser des zweiten Rohrstücks.

In allen Ausführungsformen kann das erste Rohrstück und/oder das zweite Rohrstück einen kreisförmigen Querschnitt aufweisen und/oder der Laschenabschnitt des ersten Verbindungselements sich quer zur Längserstreckung des ersten Rohrstücks über einen Umfangsbogen des ersten Rohrstücks erstrecken, der sich in einem Winkel zwischen 90 und 180 Grad um das erste Rohrstück erstreckt.

Der erste Ringabschnitt des ersten Verbindungselements kann zumindest in Höhe der ersten Ausschnittskante des einen Rohrausschnitts und der zweite Ringabschnitt des zweiten Verbindungselements kann zumindest in Höhe der zweiten Ausschnittskante des anderen Rohrausschnitts jeweils eine zumindest weitgehend konstante Wanddicke aufweisen, die im Mittel zwischen 0,5 und 2,0 Millimeter beträgt.

Das erste Verbindungselement kann einen ersten Antriebselemente-Sitz aufweisen und/oder das zweite Verbindungselement kann einen zweiten Antriebselemente-Sitz aufweisen, der jeweils ausgebildet ist, ein Antriebselement der Roboterstruktur drehfest zu tragen.

Alternativ oder ergänzend zu einem Antriebselemente-Sitz kann das erste Verbindungselement einen ersten Wälzlager-Sitz aufweisen und/oder das zweite Verbindungselement einen zweiten Wälzlager-Sitz aufweisen, der jeweils ausgebildet ist, einen Innenring eines Wälzlagers der Roboterstruktur drehfest zu tragen.

Das zweite Rohrstück kann in seiner Rohrwand wenigstens eine Durchgangsöffnung aufweisen, die in Längserstreckung des zweiten Rohrstücks auf einer Höhe angeordnet ist, die zwischen dem ersten Verbindungselement und dem zweiten Verbindungselement liegt, wobei die Durchgangsöffnung ausgebildet ist zum Hindurchleiten einer elektrischen Leitung zwischen einem ersten Hohlraum des ersten Rohrstücks und einem zweiten Hohlraum des zweiten Rohrstücks.

Die Aufgabe wird insbesondere gelöst durch eine Rehabilitationsvorrichtung, aufweisend ein Stativ, eine an dem Stativ befestigte Hubsäule, einen an der Hubsäule höhenverstellbar gelagerten Hubschlitten, der mittels eines ersten Antriebs der Rehabilitationsvorrichtung automatisch höhenbeweglich ist, einen an dem Hubschlitten um eine erste, vertikale Drehachse schwenkbar gelagerten Grundarm, der mittels eines zweiten Antriebs der Rehabilitationsvorrichtung automatisch angetrieben um die erste, vertikale Drehachse zu schwenken ist, einen an dem Grundarm um eine zweite, vertikale Drehachse schwenkbar gelagerten Vorderarm, der mittels eines dritten Antriebs der Rehabilitationsvorrichtung automatisch angetrieben um die zweite, vertikale Drehachse zu schwenken ist, ein an dem Vorderarm um eine dritte, vertikale Drehachse frei drehbar gelagertes Verbindungsstück, und eine an dem Verbindungsstück um eine vierte, horizontale Drehachse kippbar gelagerte Körperteilauflage, wobei zumindest der Grundarm, der Vorderarm und das Verbindungsstück als eine Roboterstruktur mit einem Glied ausgebildet ist, wie nach einer oder mehreren der beschriebenen Ausführungen der erfindungsgemäßen Roboterstruktur.

Das an dem Vorderarm um eine dritte, vertikale Drehachse frei drehbare Verbindungsstück ist somit an dem Vorderarm unangetrieben frei drehbar gelagert.

Jeder Antrieb der Rehabilitationsvorrichtung kann einem einzelnen antreibbaren Gelenk der Rehabilitationsvorrichtung zugeordnet sein. Jeder Antrieb kann beispielsweise in einem dem anzutreibenden Gelenk in der kinematischen Kette unmittelbar vorgelagerten Glied angeordnet sein oder in einem dem anzutreibenden Gelenk in der kinematischen Kette unmittelbar nachgelagerten Glied angeordnet sein. Gegebenenfalls können zwei oder mehr Antriebe für verschiedene Gelenke in demselben Glied angeordnet sein. Insbesondere der Hubschlitten kann Antriebe sowohl zum Bewegen des Grundarms als auch zum Bewegen des Vorderarms aufweisen.

Alle Antriebe können von einer gemeinsamen Steuerungsvorrichtung der Rehabilitationsvorrichtung automatisch angetrieben werden, insbesondere programmgesteuert angetrieben werden.

Die Körperteilauflage bildet ein Verbindungsglied, um die Rehabilitationsvorrichtung an einen Körperteil einer zu behandelnden Person ankoppeln zu können. Ein Ankoppeln kann bereits dadurch erfolgen, dass die Person eines ihrer Körperteile, wie beispielsweise die Hand, den Unterarm oder das Bein auf einer Auflagefläche der Körperteilauflage auflegt. Die Körperteilauflage kann ein Befestigungsmittel, wie beispielsweise wenigstens einen zurrbaren Riemen, aufweisen, der ausgebildet ist, zum lösbaren Befestigen des Körperteile der Person an der Körperteilauflage.

Die Körperteilauflage kann mittels eines vierten Antriebs der Rehabilitationsvorrichtung automatisch angetrieben um die vierte, horizontale Drehachse zu kippen sein.

Das Kippen der Körperteilauflage kann dadurch erfolgen, dass eine Steuerungsvorrichtung der Rehabilitationsvorrichtung den vierten Antrieb ansteuert.

Die automatisch angetriebene Bewegung der Körperteilauflage relativ zum Verbindungsstück kann an die automatisch angetriebene Höhenbewegung des Hubschlittens relativ zur Hubsäule gekoppelt sein.

Eine Koppelung der Bewegung der Körperteilauflage relativ zum Verbindungsstück mit der Höhenbewegung des Hubschlittens bedeutet, dass die Höhenbewegung des Hubschlittens eine Eingangsgröße bildet zum Ansteuern der Kippbewegung der Körperteilauflage. Diese Kippbewegung der Körperteilauflage kann synchron zur Höhenbewegung des Hubschlittens erfolgen. Alternativ kann die Kippbewegung der Körperteilauflage auch asynchron zur Höhenbewegung des Hubschlittens erfolgen, aber in einer vorbestimmten anderen Abhängigkeit zur Höhenbewegung des Hubschlittens stehen.

Der erste Antrieb kann einen im Stativ oder in der Hubsäule angeordneten ersten Motor umfassen, der ausgebildet ist, den Hubschlitten motorisch angetrieben an der Hubsäule zu heben und/oder zu senken, und die Rehabilitationsvorrichtung kann dabei eine mechanische Kopplungseinrichtung aufweisen, die einen Teil des vierten Antriebs bildet und die ausgebildet ist, eine Antriebsbewegung des ersten Motors auf die Körperteilauflage zu übertragen, derart, dass bei einer Hubbewegung des Hubschlittens, angetrieben durch den ersten Motor, die Körperteilauflage eine zur Hubbewegung synchrone Kippbewegung ausführt.

Die mechanische Kopplungseinrichtung kann insbesondere ausgebildet sein eine Hubbewegung des Hubschlittens aufzunehmen und die Hubbewegung in eine Kippbewegung der Körperteilauflage umsetzen. Ein solches Umsetzen kann auch eine Übersetzung, realisiert beispielsweise durch ein Getriebe, beinhalten.

Der erste Antrieb kann einen im Stativ oder in der Hubsäule angeordneten ersten Motor umfassen, der ausgebildet ist, den Hubschlitten motorisch angetrieben an der Hubsäule zu heben und/oder zu senken, und der vierte Antrieb kann dabei einen vierten Motor aufweisen, der ausgebildet ist, seine Antriebsbewegung auf die Körperteilauflage zur Ausführung einer Kippbewegung der Körperteilauflage zu übertragen, wobei der vierte Motor steuerungstechnisch mit dem ersten Motor gekoppelt ist, derart, dass bei einer Antriebsbewegung des ersten Motors, um den Hubschlitten relativ zur Hubsäule zu bewegen, eine gleichzeitig angesteuerte Bewegung des vierten Motors eine zur Hubbewegung synchrone Kippbewegung der Körperteilauflage bewirkt.

Eine steuerungstechnische Koppelung des vierten Motors mit dem ersten Motor kann beispielsweise über die Steuerungsvorrichtung der Rehabilitationsvorrichtung erfolgen, die auch die weiteren Antriebe der Rehabilitationsvorrichtung ansteuert.

Der zweite Antrieb kann generell einen zweiten Motor umfassen, der dritte Antrieb kann dabei einen dritten Motor umfassen, wobei der erste Motor, der zweite Motor und der dritte Motor durch eine gemeinsame Steuerungseinrichtung der Rehabilitationsvorrichtung in einer Nachgiebigkeitsregelung, insbesondere einer Impedanzregelung oder einer Admittanzregelung angesteuert sind.

Ein kraft- und/oder momentengeregelter Betrieb der Antriebe bzw. der Motoren, d.h. eine Nachgiebigkeitsregelung kann beispielsweise mittels Impedanzregelung oder Admittanzregelung erfolgen. Eine Admittanzregelung basiert auf einer vorhandenen Positionsregelung der Stellungen der Rehabilitationsvorrichtung auf Gelenkebene der Rehabilitationsvorrichtung. Hierbei werden die von außen auf die Rehabilitationsvorrichtung einwirkenden verallgemeinerten Kräfte gemessen. Ausgehend von diesen Kräften wird eine dem gewünschten dynamischen Verhalten entsprechende Bewegung der Rehabilitationsvorrichtung bestimmt, die über eine inverse Kinematik und die unterlagerte Positionsregelung an die Antriebe bzw. die Motoren kommandiert wird. Eine Impedanzregelung basiert im Gegensatz zu einer Admittanzregelung auf einer vorhandenen Drehmomentenregelung auf Gelenkebene. Es werden die Abweichung der tatsächlichen Ist-Lage von einer definierten Soll-Lage gemessen und entsprechend des gewünschten dynamischen Verhaltens eine gewünschte verallgemeinerte Kraft, bzw. Kräfte und Momente, bestimmt. Diese Kraft kann über die bekannte Kinematik der Rehabilitationsvorrichtung auf entsprechende Gelenkdrehmomente abgebildet werden. Die Drehmomente können schließlich über die unterlagerte Drehmomentenregelung eingestellt werden.

Bei der Rehabilitationsvorrichtung handelt es sich insbesondere um eine sogenannte serielle Kinematik, bei der die Glieder und die Gelenke der Rehabilitationsvorrichtung abwechselnd seriell hintereinander angeordnet sind.

Der zweite Antrieb kann einen zweiten Motor umfassen, der dritte Antrieb kann dabei einen dritten Motor umfassen, wobei der zweite Motor und der dritte Motor durch eine gemeinsame Steuerungseinrichtung der Rehabilitationsvorrichtung in einer Nachgiebigkeitsregelung, insbesondere Impedanzregelung oder einer Admittanzregelung, angesteuert sind und der erste Motor durch die Steuerungseinrichtung positionsgesteuert angesteuert ist.

Der Vorderarm kann generell mittels eines zweiten Gelenks um die zweite Drehachse schwenkbar an dem Grundarm gelagert sein, wobei das zweite Gelenk ausgebildet ist, den Vorderarm in allen Schwenklagen des Vorderarms oberhalb des Grundarms zu lagern, sowie das Verbindungsstück mittels eines dritten Gelenks um die dritte Drehachse schwenkbar an dem Vorderarm gelagert ist, wobei das dritte Gelenk ausgebildet ist, das Verbindungsstück in allen Schwenklagen des Verbindungsstücks oberhalb des Vorderarms zu lagern, und die Körperteilauflage mittels eines vierten Gelenks um die vierte Drehachse kippbar an dem Verbindungsstück gelagert ist, wobei das vierte Gelenk ausgebildet ist, die Körperteilauflage in allen Schwenklagen der Körperteilauflage oberhalb des Vorderarms zu lagern.

Ein Klemmschutz kann dadurch erreicht bzw. verbessert werden, dass die in einer Überlagerungsstellung von Grundarm und Vorderarm aufeinander zuweisenden Oberflächen von Grundarm und Vorderarm jeweils mit einer elastischen Schicht belegt sind.

In allen Ausführungsformen kann die Körperteilauflage wahlweise als eine Armauflage, als eine Handauflage oder als eine Beinauflage ausgebildet sein.

Im Folgenden wird die Erfindung, gegebenenfalls auch mit anderen Worten ausgedrückt, nochmals zusammenfassend dargestellt.

Das Ziel der Erfindung ist es, eine neuartige Eckverbindung für rohrartige Körper, insbesondere für dünnwandige rohrartige Körper und speziell mit unterschiedlichem Außendurchmesser zu schaffen, die es ermöglicht, einen sehr einfachen und dabei sehr steifen Strukturaufbau von Robotergliedern zu realisieren. Der Eckverbinder, d.h. das erste Verbindungselement und das zweite Verbindungselement, sowie das gesamte Strukturdesign können dabei extrem leicht ausgeführt werden. Dabei sollen die Eckverbinder so wenig Bauraum wie möglich einnehmen. Der Aufbau soll zudem sehr kostengünstig und auch bei kleiner Stückzahl wirtschaftlich herstellbar sein. Dabei können die Eckverbinder beispielsweise aus Kunststoff aufgebaut sein, die in der Großserie spritzgießbar und in der Kleinserie beispielsweise im 3D-Druckverfahren herstellbar sind.

Unabhängig von Werkstoff und Herstellverfahren sollen die aufgebauten Verbindungen hohe Steifigkeitseigenschaften aufweisen.

Der Eckverbinder soll vor allem für den Einsatz bei Rehabilitationsvorrichtungen geeignet sein und hier neue Möglichkeiten schaffen, steife und leichte Strukturen zu realisieren.

Die einfachste Verbindung zweier Rohre mit unterschiedlichem Außendurchmesser ist das Ineinanderstecken, indem das kleinere Rohr in einer Querbohrung des größeren Rohrs fixiert wird. Besitzen die beiden Rohre dabei sehr dünne Wandstärken, wie beispielsweise von 1,0 -1,5mm, so ergeben sich je nach Fügeverfahren unterschiedliche Anforderungen.

Neben der Dünnwandigkeit, die vor allem beim Schweißen oder Hartlöten zu Herausforderungen führt, ist die hieraus resultierende geringe Kontaktfläche nachteilig im Hinblick auf alternativen, wie Klebe- oder Pressverbindungen. Je nach Belastungsart und Belastungsrichtung überträgt zudem nur ein kleiner Bereich der kleinen Kontaktfläche die Kräfte und Momente, wodurch die zulässige Flächenpressung der dünnen Rohre schnell überschritten wird.

Ein Verkleben der Rohre vergrößert die kraftübertragende Fläche, da hier auch Zugkräfte übertragen und die Druckbereiche entlastet werden können. Kritisch ist hierbei jedoch ebenfalls die geringe Kontaktfläche, die für die Klebung genutzt werden kann.

Genau hier setzt die Erfindung an. In der Grundidee soll die Kraftübertragung zwischen den Rohren so direkt wie möglich gestaltet sein, um Material und damit Gewicht einsparen zu können. Die Rohre werden dabei nicht voreinander senkrecht angeordnet, sondern wie oben beschrieben ineinander. Dadurch werden das oder die verbindenden Elemente nicht durch ungünstige Momente, beispielsweise durch Biegung und/oder Torsion belastet und können leichter und zugleich steifer ausgeführt werden.

Die erfindungsgemäße Verbindung ist dabei wie im Folgenden beispielhaft beschrieben aufgebaut.

Ein erstes Rohrstück entspricht der Haupttragstruktur eines Gliedes. Ein kleineres, zweites Rohrstück, das zum ersten Rohrstück gewinkelt, insbesondere vorwiegend senkrecht angeordnet ist, kann in Richtung einer Drehgelenksachse weisen. Das zweite Rohrstück ist fest mit dem ersten Rohrstück verbunden und nimmt über die Mantelflächen, entweder auf der Rohrinnenseite oder der Rohraußenseite, die Lager für den Gelenkaufbau auf. Das Verbindungselement ist dabei ein- oder mehrteilig insbesondere zweiteilig ausgeführt. Hier bilden die zwei Verbindungselemente die Verbindung zwischen den beiden Rohren, indem sie sowohl im oberen Kontaktbereich, als auch im unteren Kontaktbereich breite Kontaktbereiche ausbilden, über die Kräfte großflächig geleitet werden können. Dabei soll zwischen den Zwischenelementen und dem ersten Rohrstück eine stoffschlüssige Verbindung, insbesondere eine großflächige Verklebung ausgebildet werden, während zwischen dem zweiten Rohrstück und den Zwischenelementen eine Pressverbindung und/oder eine Verklebung ausgebildet sein kann. Die Kontaktflächen der Zwischenelemente zu dem ersten Rohrstück sind weit im Umfang gezogen, um die wirksame Klebefläche zu vergrößern und für Belastungen in allen Richtungen stabil zu gestalten.

Ringförmige Abschnitte an den beiden Verbindungselementen stellen jeweils die Zentrierung zum ersten Rohrstück sicher. Das erste Verbindungselement besitzt dabei eine sehr tief gezogene Zentrierung, d.h. einen ersten Ringabschnitt zur Vergrößerung der Kontaktfläche zum zweiten Rohrstück. Das zweite Verbindungselement besitzt nur eine sehr kurze Zentrierung, d.h. einen zweiten Ringabschnitt, die den Platzbedarf der beiden Rohrstücke im Wesentlichen nach außen hin nicht vergrößert. Die zentrierenden Bereiche bilden im Grunde den kürzesten Abstand zwischen den Rohrstücken und damit den kürzesten Kraftfluss. Obwohl die Kraft großflächig über die Kontaktflächen geführt wird, wird der Bereich der Zentrierungen weiterhin belastet. Aus Steifigkeitsgründen wird hier insbesondere eine dünnwandige Zentrierung angestrebt damit sich nur wenig nachgiebiges Material, wie insbesondere Kunststoff, zwischen den steifen Metallrohren befindet.

Ein dickerer Kunststoffbereich ist erfindungsgemäß nachteilig, da in diesem Falle mehr Material zur Komprimierung vorhanden wäre und dies zu einem stärkeren Federverhalten des Gliedaufbaus führen würde.

Das erste Verbindungselement kann auf der Oberseite zur Strukturmitte weiter verlängert sein, um die Kontaktfläche zu vergrößern und besser Kippbelastungen auf die Drehachse aufnehmen zu können. Speziell bei einer Hauptbelastungsrichtung nach vorne d.h. bei Belastung des nachfolgenden Gliedes nach unten, z.B. durch Gewichtskräfte, trägt dieser Zusatzbereich durch Aufnahme von Zugkräften in der Verklebung zur weiteren Versteifung und Stabilität der Verbindung bei.

Im oberen Kontaktbereich zum zweiten Rohrstück kann das erste Verbindungselement weitere Ausgestaltungen, wie beispielsweise eine axiale Lageranlagefläche für ein unteres Gelenklager umfassen, die direkt in das Verbindungselement integriert sein können.

Die beiden Verbindungselemente können komplett hohl, zu einer Seite hin, vorzugsweise zu einer der Kontaktfläche abgewandten Seite hin, offen und ggf. mit Rippen, insbesondere mit konstanter Wandstärke versehen sein. Dadurch sind solche Verbindungselemente nicht nur leicht, sondern können auch sehr einfach und kostengünstig mit wenig Materialeinsatz hergestellt werden, sowohl als Spritzgussteil in der Großserie als auch als 3D-Druckteil im Prototypenbau bzw. in der Kleinserie.

Zur Montage wird zunächst das zweite Verbindungselement leicht höher in das erste Rohrstück eingesetzt, sodass es nicht mit der Innenmantelfläche kollidiert. Hierzu können an dem zweiten Verbindungselement an entsprechenden Stellen Aussparungen und Abflachungen vorgesehen sein. Das zweite Verbindungselement kann dann von innen in die Aussparung für das zweite Rohrstück gesteckt und entsprechend verklebt werden. Danach kann das erste Verbindungselement entsprechend von außen auf das erste Rohrstück aufgesetzt und ebenfalls verklebt werden. Das zweite Rohrstück wird abschließend in das erste Verbindungselement und das zweite Verbindungselement geschoben und mit diesen verpresst und/oder verklebt.

Die erfindungsgemäß beschriebenen Zwischenelemente können an sämtlichen Schnittstellen jeweils zweier Rohrstücke eingesetzt werden und ermöglichen so auch einen durchgängigen Strukturaufbau auf Basis sehr leichter dünnwandiger Alu-Rohre.

Die Erfindung ist eigenständig und kann in vielen Bereichen der Robotik eingesetzt werden. Im Rahmen einer Rehabilitationsanwendung ist die Erfindung besonders zweckmäßig als Strukturteil einer Rehabilitationsvorrichtung einsetzbar.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine Explosionsdarstellung eines ersten und zweiten Rohrstücks, sowie eines ersten und zweiten Verbindungselements einer Ausführungsform der Roboterstruktur,
- Fig. 2: das erste und zweite Rohrstück, sowie das erste und zweite Verbindungselement der Roboterstruktur gemäß Fig. 1 im Zusammenbau,
- Fig. 3: eine Schnittdarstellung durch das erste und zweite Rohrstück im Bereich des ersten und zweiten Verbindungselements,
- Fig. 4: eine laterale Seitenansicht des ersten und zweiten Rohrstücks, sowie des ersten und zweiten Verbindungselements der Roboterstruktur gemäß Fig. 1 im Zusammenbau,
- Fig. 5: eine stirnseitige Seitenansicht des ersten und zweiten Rohrstücks, sowie des ersten und zweiten Verbindungselements der Roboterstruktur gemäß Fig. 1 im Zusammenbau,
- Fig. 6: eine perspektivische Darstellung des ersten Verbindungselements in Alleinstellung,
- Fig. 7: eine perspektivische Darstellung des zweiten Verbindungselements in Alleinstellung,
- Fig. 8: eine erste Ausführungsvariante einer Roboterstruktur mit mehreren Gelenken und Gliedern, die erfindungsgemäß ausgebildet sind,
- Fig. 9: eine zweite Ausführungsvariante einer Roboterstruktur mit mehreren Gelenken und Gliedern, die erfindungsgemäß ausgebildet sind,
- Fig. 10: eine perspektivische Darstellung einer Rehabilitationsvorrichtung, die eine erfindungsgemäße Roboterstruktur aufweisen kann, im Einsatz an einer Person,
- Fig. 11: eine perspektivische Darstellung der Rehabilitationsvorrichtung in Alleinstellung, und
- Fig. 12: eine Seitenansicht der Rehabilitationsvorrichtung gemäß Fig. 10 oder Fig. 11.

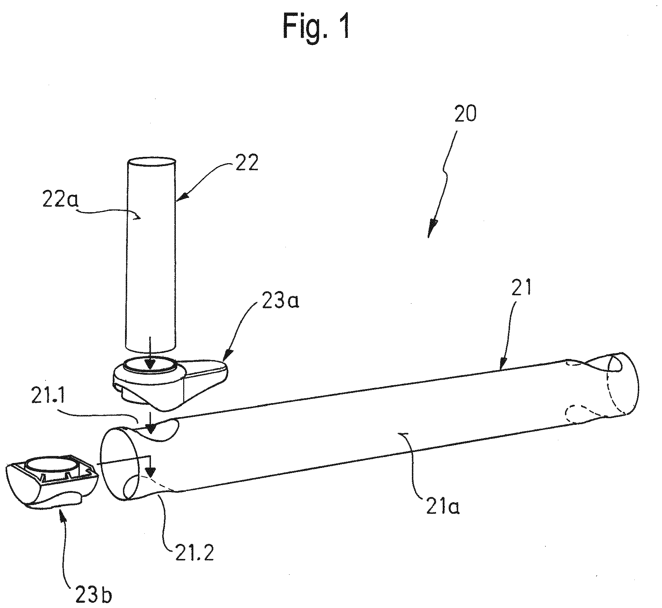

Die Fig. 1 zeigt ein repräsentatives Glied 20 einer Roboterstruktur, die mehrere Glieder und diese Glieder miteinander verbindende Gelenke aufweist.

Dieses Glied 20 umfasst ein erstes Rohrstück 21, das eine erste Mantelaußenwand 21a aufweist und ein zweites Rohrstück 22, das eine zweite Mantelaußenwand 22b aufweist, wobei das zweite Rohrstück 22 mit seiner Längserstreckung in einem Winkel zur Längserstreckung des ersten Rohrstücks 21, wie in Fig. 1 bis Fig. 5 dargestellt, angeordnet ist, derart dass das zweite Rohrstück 22 in zwei gegenüberliegende Rohrausschnitte 21.1, 21.2 des ersten Rohrstücks 21 eingesteckt ist und dabei das zweite Rohrstück 22 die erste Mantelaußenwand 21a des ersten Rohrstücks 21 an gegenüberliegenden Seiten durchdringt.

Das zweite Rohrstück 22 ist mit dem ersten Rohrstück 21 mittels eines ersten Verbindungselements 23a und eines zweiten Verbindungselements 23b starr verbunden.

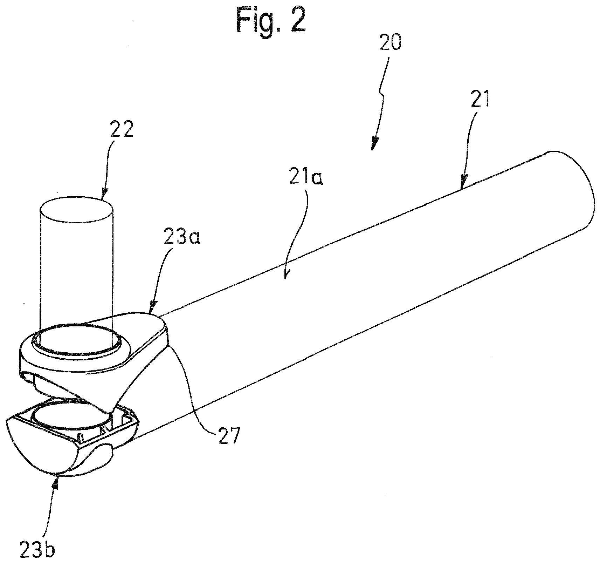

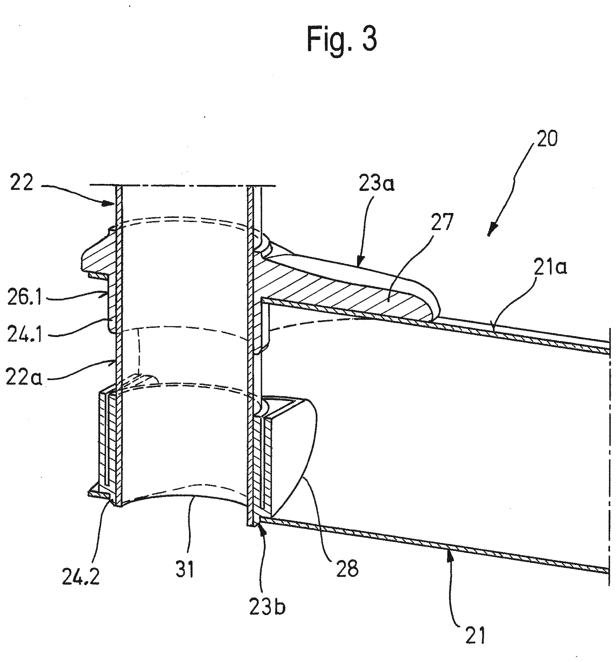

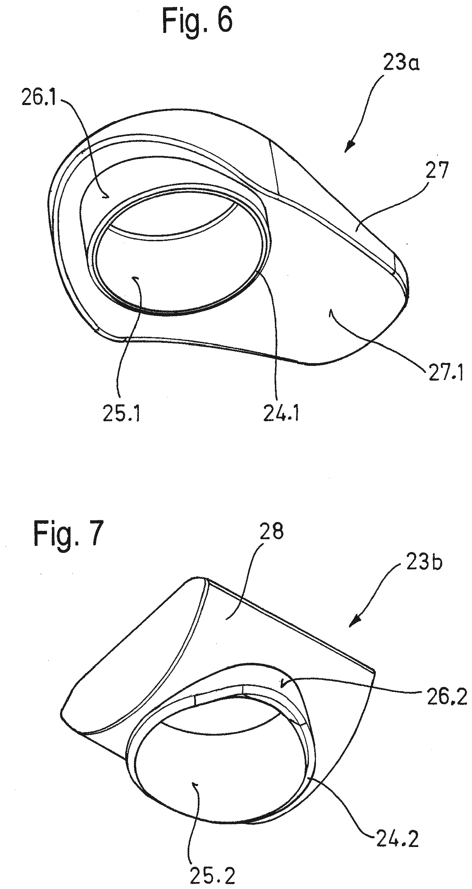

Wie insbesondere in Fig. 6 dargestellt ist, weist das erste Verbindungselement 23a einen ersten Ringabschnitt 24.1 auf, der mit seiner ersten Ringinnenmantelwand 25.1 an der zweiten Mantelaußenwand 22a des zweiten Rohrstücks 22 bündig anliegt und mit seiner ersten Ringaußenmantelwand 26.1 an einer ersten Ausschnittskante des einen Rohrausschnitts 21.1 des ersten Rohrstücks 21 bündig anliegt und das erste Verbindungselement 23a einen sich an den ersten Ringabschnitt 24.1 anschließenden Laschenabschnitt 27 aufweist, der sich mit seiner Längserstreckung entlang der Längserstreckung des ersten Rohrstücks 21 an dessen erster Mantelaußenwand 21a bündig anliegend erstreckt, wie dies insbesondere in Fig. 2 und Fig. 3 ersichtlich ist.

Wie insbesondere in Fig. 7 dargestellt ist, weist das zweite Verbindungselement 23b einen zweiten Ringabschnitt 24.2 auf, der mit seiner zweiten Ringinnenmantelwand 25.2 an der zweiten Mantelaußenwand 22a des zweiten Rohrstücks 22 bündig anliegt und mit seiner zweiten Ringaußenmantelwand 26.2 an einer zweiten Ausschnittskante des anderen Rohrausschnitts 21.2 des ersten Rohrstücks 21 bündig anliegt und das zweite Verbindungselement 23b einen sich an den zweiten Ringabschnitt 24.2 anschließenden Zylindermantelabschnitt 28 aufweist, der an einer Innenwand der ersten Rohrstücks 21 bündig anliegt.

Das zweite Rohrstück 22 ist im Falle der vorliegenden Ausführungsbeispiele mit seiner Längserstreckung in einem rechten Winkel zur Längserstreckung des ersten Rohrstücks 21 in das erste Rohrstück 21 eingesetzt, so dass das zweite Rohrstück 22 senkrecht zu dem ersten Rohrstück 21 angeordnet ist.

Das erste Verbindungselement 23a und/oder das zweite Verbindungselement 23b sind im Falle der vorliegenden Ausführungsbeispiele jeweils als ein einstückiger Kunststoff-Spritzgusskörper oder als ein 3D-Druck-Kunststoffkörper ausgebildet.

Das erste Verbindungselement 23a ist dadurch mit dem ersten Rohrstück 21 verbunden, dass eine dem ersten Rohrstück 21 zuweisende Innenfläche 27.1 (Fig. 6) des Laschenabschnitts 27 des ersten Verbindungselements 23a mit der ersten Mantelaußenwand 21a des ersten Rohrstücks 21 im Falle der vorliegenden Ausführungsbeispiele verklebt ist.

Das zweite Verbindungselement 23b ist dadurch mit dem ersten Rohrstück 21 verbunden, dass der dem ersten Rohrstück 21 zuweisende Zylindermantelabschnitt 28 des zweiten Verbindungselements 23b mit der Innenwand des ersten Rohrstücks 21 verklebt ist.

Das erste Verbindungselement 23a kann wahlweise dadurch mit dem zweiten Rohrstück 22 verbunden sein, dass die dem zweiten Rohrstück 22 zuweisende erste Ringinnenmantelwand 25.1 des ersten Ringabschnitts 24.1 des ersten Verbindungselements 23a mit der zweiten Mantelaußenwand 22a des zweiten Rohrstücks 22 verklebt oder verpresst ist.

Das zweite Verbindungselement 23b kann wahlweise dadurch mit dem zweiten Rohrstück 22 verbunden ist, dass die dem zweiten Rohrstück 22 zuweisende zweite Ringinnenmantelwand 25.2 des zweiten Ringabschnitts 24.2 des zweiten Verbindungselements 23b mit der zweiten Mantelaußenwand 22a des zweiten Rohrstücks 22 verklebt oder verpresst ist.

Der Laschenabschnitt 27 des ersten Verbindungselements 23a erstreckt sich in Längserstreckung des ersten Rohrstücks 21 über eine Mindestlänge, die gleich oder größer ist, als die Breite, insbesondere als der Durchmesser des zweiten Rohrstücks 22.

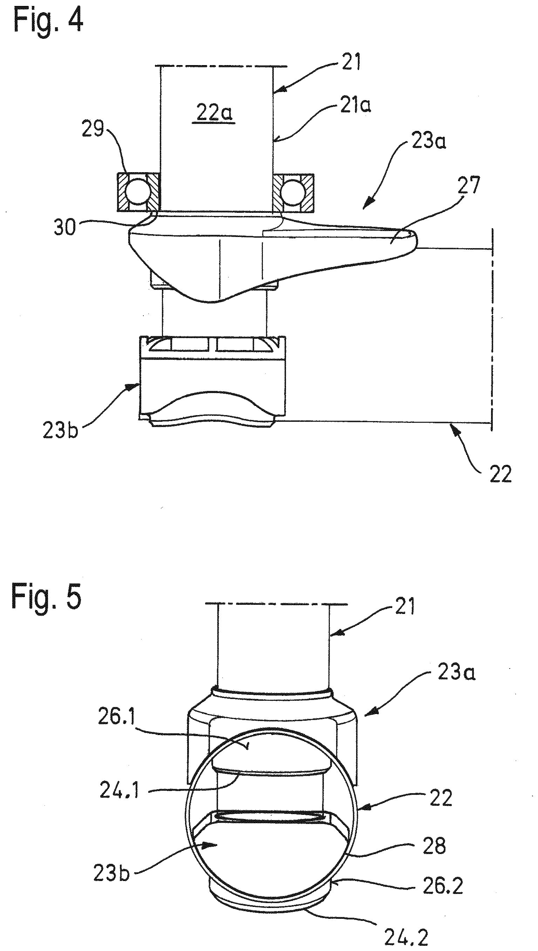

Im Falle der vorliegenden Ausführungsbeispiele weisen das erste Rohrstück 21 und das zweite Rohrstück 22 jeweils einen kreisförmigen Querschnitt auf. Der Laschenabschnitt 27 des ersten Verbindungselements 23a erstreckt sich dabei quer zur Längserstreckung des ersten Rohrstücks 21 über einen Umfangsbogen des ersten Rohrstücks 21, der sich in einem Winkel zwischen 90 und 180 Grad, hier ca. 120 Grad um das erste Rohrstück 21 erstreckt, wie dies insbesondere in Fig. 5 ersichtlich ist.

Der erste Ringabschnitt 24.1 des ersten Verbindungselements 23a weist zumindest in Höhe der ersten Ausschnittskante des einen Rohrausschnitts 21.1 eine zumindest weitgehend konstante Wanddicke auf, die im Mittel zwischen 0,5 und 2,0 Millimeter beträgt. Auch der zweite Ringabschnitt 24.2 des zweiten Verbindungselements 23b weist zumindest in Höhe der zweiten Ausschnittskante des anderen Rohrausschnitts 21.2 eine zumindest weitgehend konstante Wanddicke auf, die im Mittel zwischen 0,5 und 2,0 Millimeter beträgt.

Das erste Verbindungselement 23a weist, wie in Fig. 4 durch das Wälzlager 29 angedeutet, einen ersten Wälzlager-Sitz 30 auf, der ausgebildet ist, einen Innenring des Wälzlagers 29 der Roboterstruktur drehfest zu tragen.

Wie in Fig. 3 aufgezeigt, kann das zweite Rohrstück 22 in seiner Rohrwand wenigstens eine Durchgangsöffnung 31 aufweisen, die in Längserstreckung des zweiten Rohrstücks 22 auf einer Höhe angeordnet ist, die zwischen dem ersten Verbindungselement 23a und dem zweiten Verbindungselement 23b liegt, wobei die Durchgangsöffnung 31 ausgebildet ist zum Hindurchleiten einer elektrischen Leitung zwischen einem ersten Hohlraum des ersten Rohrstücks 21 und einem zweiten Hohlraum des zweiten Rohrstücks 22.

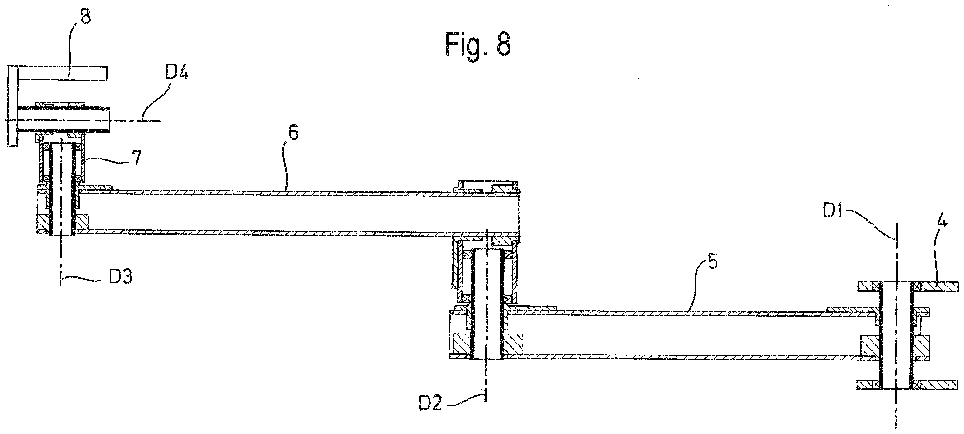

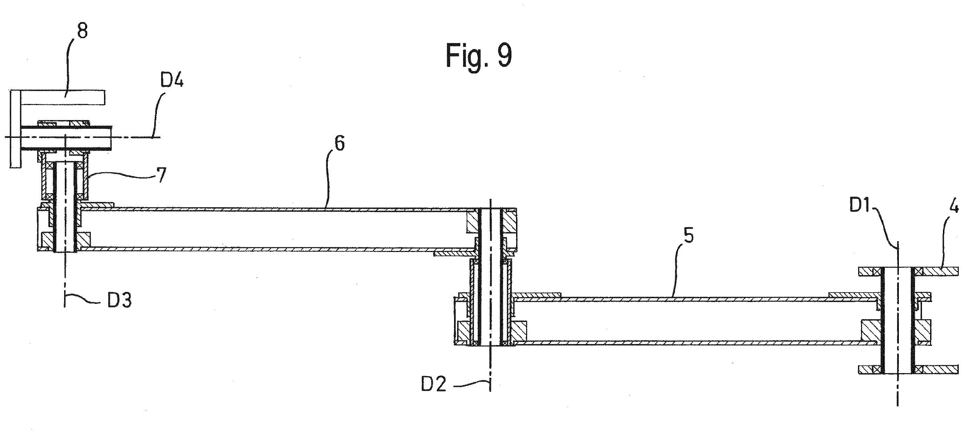

Beispielhafte Grundausführungsformen einer erfindungsgemäßen Rehabilitationsvorrichtung 1 sind in Fig. 8 bis Fig. 12 dargestellt. Die jeweilige Rehabilitationsvorrichtung 1 weist auf ein Stativ 2, eine an dem Stativ 2 befestigte Hubsäule 3, einen an der Hubsäule 3 höhenverstellbar gelagerten Hubschlitten 4, der mittels eines ersten Antriebs der Rehabilitationsvorrichtung 1 automatisch höhenbeweglich ist, einen an dem Hubschlitten 4 um eine erste, vertikale Drehachse D1 schwenkbar gelagerten Grundarm 5, der mittels eines zweiten Antriebs der Rehabilitationsvorrichtung 1 automatisch angetrieben um die erste, vertikale Drehachse D1 zu schwenken ist, einen an dem Grundarm 5 um eine zweite, vertikale Drehachse D2 schwenkbar gelagerten Vorderarm 6, der mittels eines dritten Antriebs der Rehabilitationsvorrichtung 1 automatisch angetrieben um die zweite, vertikale Drehachse D2 zu schwenken ist, ein an dem Vorderarm 6 um eine dritte, vertikale Drehachse D3 unangetrieben frei drehbar gelagertes Verbindungsstück 7, und eine an dem Verbindungsstück 7 um eine vierte, horizontale Drehachse D4 kippbar gelagerte Körperteilauflage 8.

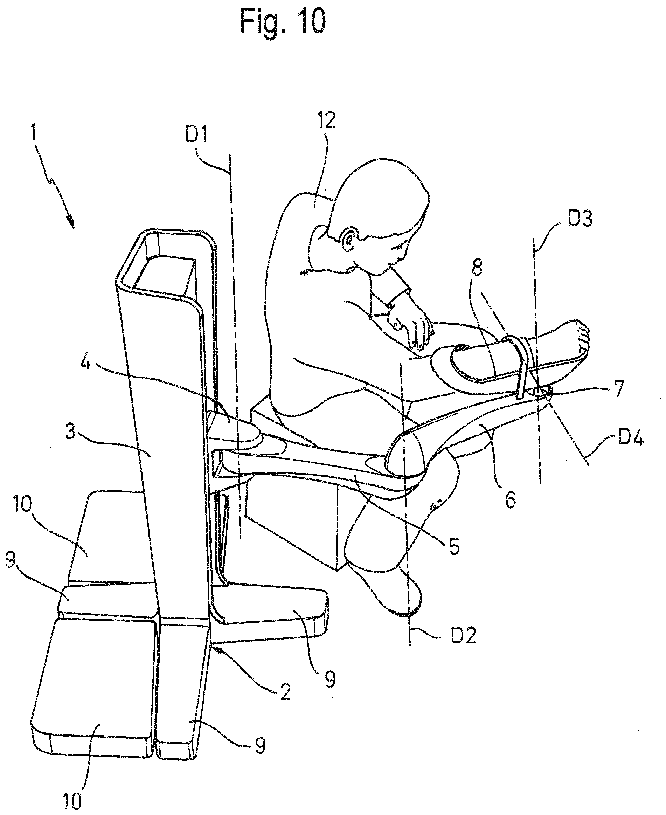

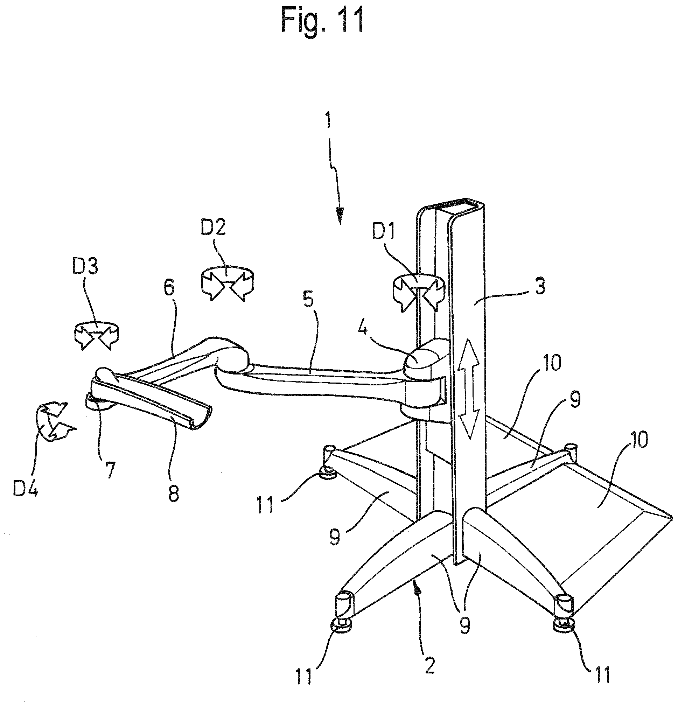

Das Stativ 2 weist Standbeine 9 auf, im Falle des vorliegenden Ausführungsbeispiels der Fig. 10 und Fig. 11 vier Standbeine 9 auf. An den Standbeinen 9 können wie dargestellt Gewichte 10 angebracht sein, um die Stabilität, d.h. die Standfestigkeit der Rehabilitationsvorrichtung 1 zu erhöhen. Die Standbeine 9 können optional, wie in Fig. 11 dargestellt, mit Standfüßen 11 versehen sein. Statt Standfüße 11 können auch Laufrollen vorgesehen sein, die ein leichtes manuelles Verfahren der Rehabilitationsvorrichtung 1 ermöglichen. Die Laufrollen können gebremst ausgebildet sein.

Im Falle des vorliegenden Ausführungsbeispiels der Fig. 10 bis Fig. 12 ist die Körperteilauflage 8 als eine Unterarmauflage ausgebildet, an der ein Unterarm einer Person 12 festgeschnallt ist.

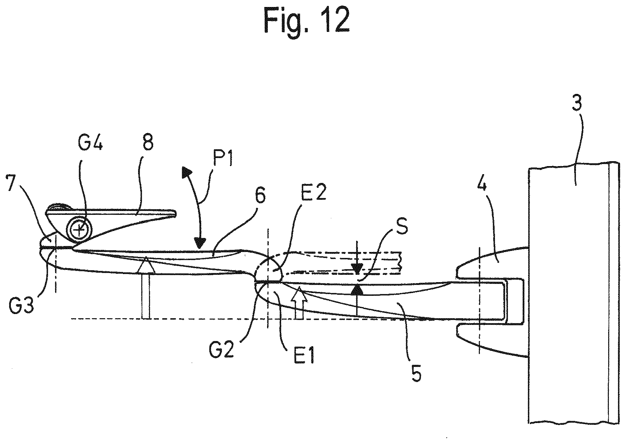

Die Fig. 12 zeigt in einer etwas abgewandelten Ausführungsform der Rehabilitationsvorrichtung 1 nochmals die Freiheitsgrade der Rehabilitationsvorrichtung 1. Auch hier umfasst die Rehabilitationsvorrichtung 1 ein Stativ 2, eine an dem Stativ 2 befestigte Hubsäule 3, einen an der Hubsäule 3 höhenverstellbar gelagerten Hubschlitten 4, der mittels eines ersten Antriebs der Rehabilitationsvorrichtung 1 automatisch höhenbeweglich ist, einen an dem Hubschlitten 4 um eine erste, vertikale Drehachse D1 schwenkbar gelagerten Grundarm 5, der mittels eines zweiten Antriebs der Rehabilitationsvorrichtung 1 automatisch angetrieben um die erste, vertikale Drehachse D1 zu schwenken ist, einen an dem Grundarm 5 um eine zweite, vertikale Drehachse D2 schwenkbar gelagerten Vorderarm 6, der mittels eines dritten Antriebs der Rehabilitationsvorrichtung 1 automatisch angetrieben um die zweite, vertikale Drehachse D2 zu schwenken ist, ein an dem Vorderarm 6 um eine dritte, vertikale Drehachse D3 unangetrieben frei drehbar gelagertes Verbindungsstück 7, und eine an dem Verbindungsstück 7 um eine vierte, horizontale Drehachse D4 kippbar gelagerte Körperteilauflage 8

Wie insbesondere aus Fig. 12 ersichtlich ist, ist der Vorderarm 6 mittels eines zweiten Gelenks G2 um die zweite Drehachse D2 schwenkbar an dem Grundarm 5 gelagert, wobei das zweite Gelenk G2 ausgebildet ist, den Vorderarm 6 in allen Schwenklagen des Vorderarms 6 oberhalb des Grundarms 5 zu lagern, wobei das Verbindungsstück 7 mittels eines dritten Gelenks G3 um die dritte Drehachse D3 schwenkbar an dem Vorderarm 6 gelagert ist, wobei das dritte Gelenk G3 ausgebildet ist, das Verbindungsstück 7 in allen Schwenklagen des Verbindungsstücks 7 oberhalb des Vorderarms 6 zu lagern, dabei ist die Körperteilauflage 8 mittels eines vierten Gelenks G4 um die vierte Drehachse D4 kippbar (Pfeil P1) an dem Verbindungsstück 7 gelagert, wobei das vierte Gelenk G4 ausgebildet ist, die Körperteilauflage 8 in allen Schwenklagen der Körperteilauflage 8 oberhalb des Vorderarms 6 zu lagern.

Die Fig. 12 zeigt außerdem, wie ein distaler Endabschnitt E1 des Grundarms 5 und/oder ein proximaler Endabschnitt E2 des Vorderarms 6, an welchem Übergang die Endabschnitte E1 und E2 die zweite Drehachse D2 angeordnet ist, gekröpft ausgebildet sein kann, derart, dass in einen übereinander angeordneten relativen Position von Grundarm 5 und Vorderarm 6, wie in Fig. 3 dargestellt, ein als Klemmschutz wirkender Spaltraum S zwischen Grundarm 5 und dem - gestrichelt dargestellten, eingeklappten - Vorderarm 6 gebildet wird.

## Patentansprüche

1. Roboterstruktur, aufweisend mehrere Glieder und diese Glieder miteinander verbindende Gelenke, wobei wenigstens ein Glied (20) dieser Glieder ein erstes Rohrstück (21) umfasst, das eine erste Mantelaußenwand (21a) aufweist und ein zweites Rohrstück (22) umfasst, das eine zweite Mantelaußenwand (22a) aufweist, wobei das zweite Rohrstück (22) mit seiner Längserstreckung in einem Winkel zur Längserstreckung des ersten Rohrstücks (21) angeordnet ist, derart dass das zweite Rohrstück (22) in zwei gegenüberliegende Rohrausschnitte (21.1, 21.2) des ersten Rohrstücks (21) eingesteckt ist und dabei das zweite Rohrstück (22) die erste Mantelaußenwand (21a) des ersten Rohrstücks (21) an gegenüberliegenden Seiten durchdringt, wobei das zweite Rohrstück (22) mit dem ersten Rohrstück (21) mittels eines ersten Verbindungselements (23a) und eines zweiten Verbindungselements (23b) starr verbunden ist, und dazu das erste Verbindungselement (23a) einen ersten Ringabschnitt (24.1) aufweist, der mit seiner ersten Ringinnenmantelwand (25.1) an der zweiten Mantelaußenwand (22a) des zweiten Rohrstücks (22) bündig anliegt und
das erste Verbindungselement (23a) einen sich an den ersten Ringabschnitt (24.1) anschließenden Laschenabschnitt (27) aufweist, der sich mit seiner Längserstreckung entlang der Längserstreckung des ersten Rohrstücks (21) an dessen erster Mantelaußenwand (21a) bündig anliegend erstreckt,
**dadurch gekennzeichnet, dass**
der erste Ringabschnitt (24.1) mit seiner ersten Ringaußenmantelwand (26.1) an einer ersten Ausschnittskante des einen Rohrausschnitts (21.1) des ersten Rohrstücks (21) bündig anliegt und
das zweite Verbindungselement (23b) einen zweiten Ringabschnitt (24.2) aufweist, der mit seiner zweiten Ringinnenmantelwand (25.2) an der zweiten Mantelaußenwand (22a) des zweiten Rohrstücks (22) bündig anliegt und mit seiner zweiten Ringaußenmantelwand (26.2) an einer zweiten Ausschnittskante des anderen Rohrausschnitts (21.2) des ersten Rohrstücks (21) bündig anliegt und das zweite Verbindungselement (23b) einen sich an den zweiten Ringabschnitt (24.2) anschließenden Zylindermantelabschnitt (28) aufweist, der an einer Innenwand der ersten Rohrstücks (21) bündig anliegt.

2. Roboterstruktur nach Anspruch 1, **dadurch gekennzeichnet, dass** das zweite Rohrstück (22) mit seiner Längserstreckung in einem rechten Winkel zur Längserstreckung des ersten Rohrstücks (21) in das erste Rohrstück (21) eingesetzt ist, so dass das zweite Rohrstück (22) senkrecht zu dem ersten Rohrstück (21) angeordnet ist.

3. Roboterstruktur nach Anspruch 1 oder 2, **dadurch gekennzeichnet, dass** das erste Verbindungselement (23a) und/oder das zweite Verbindungselement (23b) jeweils als ein einstückiger Kunststoffkörper ausgebildet ist.

4. Roboterstruktur nach einem der Ansprüche 1 bis 3, **dadurch gekennzeichnet, dass** das erste Verbindungselement (23a) dadurch mit dem ersten Rohrstück (21) verbunden ist, dass eine dem ersten Rohrstück (21) zuweisende Innenfläche (27.1) des Laschenabschnitts (27) des ersten Verbindungselements (23a) mit der ersten Mantelaußenwand (21a) des ersten Rohrstücks (21) verklebt oder stoffschlüssig verbunden ist.

5. Roboterstruktur nach einem der Ansprüche 1 bis 4, **dadurch gekennzeichnet, dass** das zweite Verbindungselement (23b) dadurch mit dem ersten Rohrstück (21) verbunden ist, dass der dem ersten Rohrstück (21) zuweisende Zylindermantelabschnitt (28) des zweiten Verbindungselements (23b) mit der Innenwand des ersten Rohrstücks (21) verklebt ist.

6. Roboterstruktur nach einem der Ansprüche 1 bis 5, **dadurch gekennzeichnet, dass** das erste Verbindungselement (23a) dadurch mit dem zweiten Rohrstück (22) verbunden ist, dass die dem zweiten Rohrstück (22) zuweisende erste Ringinnenmantelwand (25.1) des ersten Ringabschnitts (24.1) des ersten Verbindungselements (23a) mit der zweiten Mantelaußenwand (22a) des zweiten Rohrstücks (22) verklebt oder verpresst ist.

7. Roboterstruktur nach einem der Ansprüche 1 bis 6, **dadurch gekennzeichnet, dass** das zweite Verbindungselement (23b) dadurch mit dem zweiten Rohrstück (22) verbunden ist, dass die dem zweiten Rohrstück (22) zuweisende zweite Ringinnenmantelwand (25.2) des zweiten Ringabschnitts (24.2) des zweiten Verbindungselements (23b) mit der zweiten Mantelaußenwand (22a) des zweiten Rohrstücks (22) verklebt oder verpresst ist.

8. Roboterstruktur nach einem der Ansprüche 1 bis 7, **dadurch gekennzeichnet, dass** der Laschenabschnitt (27) des ersten Verbindungselements (23a) sich in Längserstreckung des ersten Rohrstücks (21) über eine Mindestlänge erstreckt, die gleich oder größer ist, als die Breite, insbesondere als der Durchmesser des zweiten Rohrstücks (22).

9. Roboterstruktur nach einem der Ansprüche 1 bis 8, **dadurch gekennzeichnet, dass** das erste Rohrstück (21) und/oder das zweite Rohrstück (22) einen kreisförmigen Querschnitt aufweist und/oder der Laschenabschnitt (27) des ersten Verbindungselements (23a) sich quer zur Längserstreckung des ersten Rohrstücks (21) über einen Umfangsbogen des ersten Rohrstücks (21) erstreckt, der sich in einem Winkel zwischen 90 und 180 Grad um das erste Rohrstück (21) erstreckt.

10. Roboterstruktur nach einem der Ansprüche 1 bis 9, **dadurch gekennzeichnet, dass** der erste Ringabschnitt (24.1) des ersten Verbindungselements (23a) zumindest in Höhe der ersten Ausschnittskante des einen Rohrausschnitts (21.1) und der zweite Ringabschnitt (24.2) des zweiten Verbindungselements (23b) zumindest in Höhe der zweiten Ausschnittskante des anderen Rohrausschnitts (21.2) jeweils eine zumindest weitgehend konstante Wanddicke aufweist, die im Mittel zwischen 0,5 und 2,0 Millimeter beträgt.

11. Roboterstruktur nach einem der Ansprüche 1 bis 10, **dadurch gekennzeichnet, dass** das erste Verbindungselement (23a) einen ersten Antriebselemente-Sitz aufweist und/oder das zweite Verbindungselement (23b) einen zweiten Antriebselemente-Sitz aufweist, der jeweils ausgebildet ist, ein Antriebselement der Roboterstruktur drehfest zu tragen.

12. Roboterstruktur nach einem der Ansprüche 1 bis 11, **dadurch gekennzeichnet, dass** das erste Verbindungselement (23a) einen ersten Wälzlager-Sitz (30) aufweist und/oder das zweite Verbindungselement (23b) einen zweiten Wälzlager-Sitz aufweist, der jeweils ausgebildet ist, einen Innenring eines Wälzlagers (29) der Roboterstruktur drehfest zu tragen.

13. Roboterstruktur nach einem der Ansprüche 1 bis 12, **dadurch gekennzeichnet, dass** das zweite Rohrstück (22) in seiner Rohrwand wenigstens eine Durchgangsöffnung (31) aufweist, die in Längserstreckung des zweiten Rohrstücks (22) auf einer Höhe angeordnet ist, die zwischen dem ersten Verbindungselement (23a) und dem zweiten Verbindungselement (23b) liegt, wobei die Durchgangsöffnung (31) ausgebildet ist zum Hindurchleiten einer elektrischen Leitung zwischen einem ersten Hohlraum des ersten Rohrstücks (21) und einem zweiten Hohlraum des zweiten Rohrstücks (22).

14. Rehabilitationsvorrichtung, aufweisend ein Stativ (2), eine an dem Stativ (2) befestigte Hubsäule (3), einen an der Hubsäule (3) höhenverstellbar gelagerten Hubschlitten (4), der mittels eines ersten Antriebs der Rehabilitationsvorrichtung (1) automatisch höhenbeweglich ist, einen an dem Hubschlitten (4) um eine erste, vertikale Drehachse (D1) schwenkbar gelagerten Grundarm (5), der mittels eines zweiten Antriebs der Rehabilitationsvorrichtung (1) automatisch angetrieben um die erste, vertikale Drehachse (D1) zu schwenken ist, einen an dem Grundarm (5) um eine zweite, vertikale Drehachse (D2) schwenkbar gelagerten Vorderarm (6), der mittels eines dritten Antriebs der Rehabilitationsvorrichtung (1) automatisch angetrieben um die zweite, vertikale Drehachse (D2) zu schwenken ist, ein an dem Vorderarm (6) um eine dritte, vertikale Drehachse (D3) frei drehbar gelagertes Verbindungsstück (7), und eine an dem Verbindungsstück (7) um eine vierte, horizontale Drehachse (D4) kippbar gelagerte Körperteilauflage (8), **dadurch gekennzeichnet, dass** zumindest der Grundarm (5), der Vorderarm (6) und das Verbindungsstück (7) als eine Roboterstruktur nach einem der Ansprüche 1 bis 13 ausgebildet ist.

15. Rehabilitationsvorrichtung nach Anspruch 14, **dadurch gekennzeichnet, dass** der Vorderarm (6) mittels eines zweiten Gelenks (G2) um die zweite Drehachse (D2) schwenkbar an dem Grundarm (5) gelagert ist, wobei das zweite Gelenk (G2) ausgebildet ist, den Vorderarm (6) in allen Schwenklagen des Vorderarms (6) oberhalb des Grundarms (5) zu lagern, sowie das Verbindungsstück (7) mittels eines dritten Gelenks (G3) um die dritte Drehachse (D3) schwenkbar an dem Vorderarm (6) gelagert ist, wobei das dritte Gelenk (G3) ausgebildet ist, das Verbindungsstück (7) in allen Schwenklagen des Verbindungsstücks (7) oberhalb des Vorderarms (6) zu lagern, und die Körperteilauflage (8) mittels eines vierten Gelenks (G4) um die vierte Drehachse (D4) kippbar an dem Verbindungsstück (7) gelagert ist, wobei das vierte Gelenk (G4) ausgebildet ist, die Körperteilauflage (8) in allen Schwenklagen der Körperteilauflage (8) oberhalb des Vorderarms (6) zu lagern.

## Claims

1. Robot structure, having multiple members and joints which connect said members to one another, wherein at least one member (20) of said members comprises a first tube piece (21) having a first casing outer wall (21a) and comprises a second tube piece (22) having a second casing outer wall (22a), wherein the second tube piece (22) is arranged with its longitudinal extent at an angle to the longitudinal extent of the first tube (21), in such a way that the second tube piece (22) is plugged into two opposite tube cutouts (21.1, 21.2) of the first tube piece (21) and in the process the second tube piece (22) passes through the first casing outer wall (21a) of the first tube piece (21) at opposite sides, wherein the second tube piece (22) is rigidly connected by means of a first connecting element (23a) and a second connecting element (23b) to the first tube piece (21), and for this purpose the first connecting element (23a) has a first ring portion (24.1) which flushly abuts with its first ring inner casing wall (25.1) against the second casing outer wall (22a) of the second tube piece (22) and the first connecting element (23a) has a tab portion (27) which is adjoined by the first ring portion (24.1) and which extends with its longitudinal extent along the longitudinal extent of the first tube piece (21) on the first casing outer wall (21a) thereof in a flushly abutting manner,
**characterized in that**
the first ring portion (24.1) flushly abuts with its first ring casing outer wall (26.1) against a first cutout edge of one tube cutout (21.1) of the first tube piece (21) and the second connecting element (23b) has a second ring portion (24.2) which flushly abuts with its second ring inner casing wall (25.2) against the second casing outer wall (22a) of the second tube piece (22) and which flushly abuts with its second ring outer casing wall (26.2) against a second cutout edge of the other tube cutout (21.2) of the first tube piece (21), and the second connecting element (23b) has a cylinder casing portion (28) which is adjoined by the second ring portion (24.2) and which flushly abuts against an inner wall of the first tube piece (21).

2. Robot structure according to Claim 1, **characterized in that** the second tube piece (22) is inserted into the first tube piece (21) with its longitudinal extent at a right angle to the longitudinal extent of the first tube piece (21), so that the second tube piece (22) is arranged perpendicularly to the first tube piece (21).

3. Robot structure according to Claim 1 or 2, **characterized in that** the first connecting element (23a) and/or the second connecting element (23b) are/is in each case designed in the form of a onepiece plastic body.

4. Robot structure according to one of Claims 1 to 3, **characterized in that** the first connecting element (23a) is connected to the first tube piece (21) **in that** an inner surface (27.1), facing towards the first tube piece (21), of the tab portion (27) of the first connecting element (23a) is adhesively bonded or connected in a materially bonded manner to the first casing outer wall (21a) of the first tube piece (21).

5. Robot structure according to one of Claims 1 to 4, **characterized in that** the second connecting element (23b) is connected to the first tube piece (21) **in that** the cylinder casing portion (28), facing towards the first tube piece (21), of the second connecting element (23b) is adhesively bonded to the inner wall of the first tube piece (21).

6. Robot structure according to one of Claims 1 to 5, **characterized in that** the first connecting element (23a) is connected to the second tube piece (22) **in that** the first ring inner casing wall (25.1), facing towards the second tube piece (22), of the first ring portion (24.1) of the first connecting element (23a) is adhesively bonded to or pressed together with the second casing outer wall (22a) of the second tube piece (22).

7. Robot structure according to one of Claims 1 to 6, **characterized in that** the second connecting element (23b) is connected to the second tube piece (22) **in that** the second ring inner casing wall (25.2), facing towards the second tube piece (22), of the second ring portion (24.2) of the second connecting element (23b) is adhesively bonded to or pressed together with the second casing outer wall (22a) of the second tube piece (22).

8. Robot structure according to one of Claims 1 to 7, **characterized in that** the tab portion (27) of the first connecting element (23a) extends in the longitudinal extent of the first tube piece (21) over a minimum length which is equal to or larger than the width, in particular than the diameter, of the second tube piece (22).

9. Robot structure according to one of Claims 1 to 8, **characterized in that** the first tube piece (21) and/or the second tube piece (22) have/has a circular cross section, and/or the tab portion (27) of the first connecting element (23a) extends transversely to the longitudinal extent of the first tube piece (21) over a circumferential arc of the first tube piece (21), which extends around the first tube piece (21) with an angle of between 90 and 180 degrees.

10. Robot structure according to one of Claims 1 to 9, **characterized in that** the first ring portion (24.1) of the first connecting element (23a), at least at the height of the first cutout edge of one tube cutout (21.1), and the second ring portion (24.2) of the second connecting element (23b), at least at the height of the second cutout edge of the other tube cutout (21.2), each have an at least largely constant wall thickness for which the average wall thickness amounts to between 0.5 and 2.0 millimetres.

11. Robot structure according to one of Claims 1 to 10, **characterized in that** the first connecting element (23a) has a first drive-element seat and/or the second connecting element (23b) has a second drive-element seat, which in each case is configured to support a drive element of the robot structure in a rotationally conjoint manner.

12. Robot structure according to one of Claims 1 to 11, **characterized in that** the first connecting element (23a) has a first rolling-bearing seat (30) and/or the second connecting element (23b) has a second rolling-bearing seat, which in each case is configured to support an inner ring of a rolling bearing (29) of the robot structure in a rotationally conjoint manner.

13. Robot structure according to one of Claims 1 to 12, **characterized in that** the second tube piece (22) has in its tube wall at least one passage opening (31) which, in the longitudinal extent of the second tube piece (22), is arranged at a height situated between the first connecting element (23a) and the second connecting element (23b), wherein the passage opening (31) is configured for passing-through of an electrical line between a first cavity of the first tube piece (21) and a second cavity of the second tube piece (22).

14. Rehabilitation apparatus, having a stand (2), a lifting column (3) which is fastened to the stand (2), a lifting carriage (4) which is mounted in a vertically displaceable manner on the lifting column (3) and which, by means of a first drive of the rehabilitation apparatus (1), is automatically vertically movable, a base arm (5) which is mounted on the lifting carriage (4) so as to be pivotable about a first, vertical axis of rotation (D1) and, by means of a second drive of the rehabilitation apparatus (1), can be pivoted about the first, vertical axis of rotation (D1) in an automatically driven manner, a front arm (6) which is mounted on the base arm (5) so as to be pivotable about a second, vertical axis of rotation (D2) and, by means of a third drive of the rehabilitation apparatus (1), can be pivoted about the second, vertical axis of rotation (D2) in an automatically driven manner, a connecting piece (7) which is mounted on the front arm (6) so as to be freely rotatable about a third, vertical axis of rotation (D3), and a body-part support (8) which is mounted on the connecting piece (7) so as to be tiltable about a fourth, horizontal axis of rotation (D4), **characterized in that** at least the base arm (5), the front arm (6) and the connecting piece (7) are designed in the form of a robot structure according to one of Claims 1 to 13.

15. Rehabilitation apparatus according to Claim 14, **characterized in that** the front arm (6) is mounted on the base arm (5) so as to be pivotable about the second axis of rotation (D2) by means of a second joint (G2), wherein the second joint (G2) is configured for the front arm (6) to be mounted above the base arm (5) in all pivoting positions of the front arm (6), and the connecting piece (7) is mounted on the front arm (6) so as to be pivotable about the third axis of rotation (D3) by means of a third joint (G3), wherein the third joint (G3) is configured for the connecting piece (7) to be mounted above the front arm (6) in all pivoting positions of the connecting piece (7), and the body-part support (8) is mounted on the connecting piece (7) so as to be tiltable about the fourth axis of rotation (D4) by means of a fourth joint (G4), wherein the fourth joint (G4) is configured for the body-part support (8) to be mounted above the front arm (6) in all pivoting positions of the body-part support (8).

## Revendications

1. Structure de robot, présentant plusieurs membres et des articulations reliant ces membres entre eux, au moins un membre (20) parmi ces membres comprenant une première pièce tubulaire (21), qui présente une première paroi extérieure d'enveloppe (21a), et comprenant une deuxième pièce tubulaire (22), qui présente une deuxième paroi extérieure d'enveloppe (22a), la deuxième pièce tubulaire (22) étant agencée avec son extension longitudinale à un angle par rapport à l'extension longitudinale de la première pièce tubulaire (21), de telle sorte que la deuxième pièce tubulaire (22) est insérée dans deux découpes de tube opposées (21.1, 21.2) de la première pièce tubulaire (21), et la deuxième pièce tubulaire (22) traverse la première paroi extérieure d'enveloppe (21a) de la première pièce tubulaire (21) sur des côtés opposés, la deuxième pièce tubulaire (22) étant reliée de manière rigide à la première pièce tubulaire (21) au moyen d'un premier élément de liaison (23a) et d'un deuxième élément de liaison (23b), et le premier élément de liaison (23a) présentant pour cela une première section annulaire (24.1) qui, par sa première paroi d'enveloppe intérieure annulaire (25.1) s'applique en affleurement contre la deuxième paroi extérieure d'enveloppe (22a) de la deuxième pièce tubulaire (22), et
le premier élément de liaison (23a) présentant une section de patte qui se raccorde à la première section annulaire (24.1), qui s'étend avec son extension longitudinale le long de l'extension longitudinale de la première pièce tubulaire (21) en s'appliquant en affleurement contre sa première paroi extérieure d'enveloppe (21a),
**caractérisée en ce que**
la première section annulaire (24.1), par sa première paroi d'enveloppe extérieure annulaire (26.1), s'applique en affleurement contre un premier bord de découpe de l'une des découpes de tube (21.1) de la première pièce tubulaire (21) et
le deuxième élément de liaison (23b) présente une deuxième section annulaire (24.2) qui, par sa deuxième paroi d'enveloppe intérieure annulaire (25.2), s'applique en affleurement contre la deuxième paroi extérieure d'enveloppe (22a) de la deuxième pièce tubulaire (22) et, par sa deuxième paroi d'enveloppe extérieure annulaire (26. 2), s'applique en affleurement contre un deuxième bord de découpe de l'autre découpe de tube (21.2) de la première pièce tubulaire (21), et le deuxième élément de liaison (23b) présente une section d'enveloppe cylindrique (28) qui se raccorde à la deuxième section annulaire (24.2), qui s'applique en affleurement contre une paroi intérieure de la première pièce tubulaire (21).

2. Structure de robot selon la revendication 1, **caractérisée en ce que** la deuxième pièce tubulaire (22) est introduite dans la première pièce tubulaire (21) avec son extension longitudinale à angle droit par rapport à l'extension longitudinale de la première pièce tubulaire (21), de telle sorte que la deuxième pièce tubulaire (22) est agencée perpendiculairement à la première pièce tubulaire (21).

3. Structure de robot selon la revendication 1 ou 2, **caractérisée en ce que** le premier élément de liaison (23a) et/ou le deuxième élément de liaison (23b) sont chacun configurés sous la forme d'un corps en matière plastique d'un seul tenant.

4. Structure de robot selon l'une quelconque des revendications 1 à 3, **caractérisée en ce que** le premier élément de liaison (23a) est relié à la première pièce tubulaire (21) par le fait qu'une surface intérieure (27.1), orientée vers la première pièce tubulaire (21), de la section de patte (27) du premier élément de liaison (23a) est collée ou reliée par liaison de matière à la première paroi extérieure d'enveloppe (21a) de la première pièce tubulaire (21).

5. Structure de robot selon l'une quelconque des revendications 1 à 4, **caractérisée en ce que** le deuxième élément de liaison (23b) est relié à la première pièce tubulaire (21) par le fait que la section d'enveloppe cylindrique (28), orientée vers la première pièce tubulaire (21), du deuxième élément de liaison (23b) est collée à la paroi intérieure de la première pièce tubulaire (21).

6. Structure de robot selon l'une quelconque des revendications 1 à 5, **caractérisée en ce que** le premier élément de liaison (23a) est relié à la deuxième pièce tubulaire (22) par le fait que la première paroi d'enveloppe intérieure annulaire (25.1), orientée vers la deuxième pièce tubulaire (22), de la première section annulaire (24.1) du premier élément de liaison (23a) est collée ou assemblée par pression avec la deuxième paroi extérieure d'enveloppe (22a) de la deuxième pièce tubulaire (22).

7. Structure de robot selon l'une quelconque des revendications 1 à 6, **caractérisée en ce que** le deuxième élément de liaison (23b) est relié à la deuxième pièce tubulaire (22) par le fait que la deuxième paroi d'enveloppe intérieure annulaire (25.2), orientée vers la deuxième pièce tubulaire (22), de la deuxième section annulaire (24.2) du deuxième élément de liaison (23b), est collée ou assemblée par pression avec la deuxième paroi extérieure d'enveloppe (22a) de la deuxième pièce tubulaire (22).

8. Structure de robot selon l'une quelconque des revendications 1 à 7, **caractérisée en ce que** la section de patte (27) du premier élément de liaison (23a) s'étend dans l'extension longitudinale de la première pièce tubulaire (21) sur une longueur minimale qui est égale ou supérieure à la largeur, notamment au diamètre, de la deuxième pièce tubulaire (22).

9. Structure de robot selon l'une quelconque des revendications 1 à 8, **caractérisée en ce que** la première pièce tubulaire (21) et/ou la deuxième pièce tubulaire (22) présentent une section transversale circulaire et/ou la section de patte (27) du premier élément de liaison (23a) s'étend transversalement à l'extension longitudinale de la première pièce tubulaire (21) sur un arc de circonférence de la première pièce tubulaire (21), qui s'étend autour de la première pièce tubulaire (21) à un angle compris entre 90 et 180 degrés.

10. Structure de robot selon l'une quelconque des revendications 1 à 9, **caractérisée en ce que** la première section annulaire (24.1) du premier élément de liaison (23a) présente, au moins à hauteur du premier bord de découpe de l'une des découpes de tube (21.1), et la deuxième section annulaire (24.2) du deuxième élément de liaison (23b) présente, au moins à hauteur du deuxième bord de découpe de l'autre découpe de tube (21.2), à chaque fois une épaisseur de paroi au moins largement constante, qui est en moyenne comprise entre 0,5 et 2,0 millimètres.

11. Structure de robot selon l'une quelconque des revendications 1 à 10, **caractérisée en ce que** le premier élément de liaison (23a) présente un premier siège d'élément d'entraînement et/ou le deuxième élément de liaison (23b) présente un deuxième siège d'élément d'entraînement, qui est à chaque fois conçu pour porter de manière immobile en rotation un élément d'entraînement de la structure de robot.

12. Structure de robot selon l'une quelconque des revendications 1 à 11, **caractérisée en ce que** le premier élément de liaison (23a) présente un premier siège de palier à roulement (30) et/ou le deuxième élément de liaison (23b) présente un deuxième siège de palier à roulement, qui est configuré à chaque fois pour porter de manière immobile en rotation une bague intérieure d'un palier à roulement (29) de la structure de robot.

13. Structure de robot selon l'une quelconque des revendications 1 à 12, **caractérisée en ce que** la deuxième pièce tubulaire (22) présente dans sa paroi tubulaire au moins une ouverture de passage (31), qui est agencée dans l'extension longitudinale de la deuxième pièce tubulaire (22) à une hauteur située entre le premier élément de liaison (23a) et le deuxième élément de liaison (23b), l'ouverture de passage (31) étant configurée pour faire passer un câble électrique entre une première cavité de la première pièce tubulaire (21) et une deuxième cavité de la deuxième pièce tubulaire (22).

14. Dispositif de rééducation, présentant un trépied (2), une colonne de levage (3) fixée au trépied (2), un chariot de levage (4) monté de manière réglable en hauteur sur la colonne de levage (3), qui peut être déplacé en hauteur automatiquement au moyen d'un premier entraînement du dispositif de rééducation (1), un bras de base (5) monté sur le chariot de levage (4) de manière à pouvoir pivoter autour d'un premier axe de rotation vertical (D1), qui est entraîné automatiquement au moyen d'un deuxième entraînement du dispositif de rééducation (1) pour pivoter autour du premier axe de rotation vertical (D1), un bras avant (6) monté sur le bras de base (5) de manière à pouvoir pivoter autour d'un deuxième axe de rotation vertical (D2), qui est entraîné automatiquement au moyen d'un troisième entraînement du dispositif de rééducation (1) pour pivoter autour du deuxième axe de rotation vertical (D2), une pièce de liaison (7) montée sur le bras avant (6) de manière à pouvoir tourner librement autour d'un troisième axe de rotation vertical (D3), et un support de partie de corps (8) monté sur la pièce de liaison (7) de manière à pouvoir basculer autour d'un quatrième axe de rotation horizontal (D4), **caractérisé en ce qu'**au moins le bras de base (5), le bras avant (6) et la pièce de liaison (7) sont configurés sous la forme d'une structure de robot selon l'une quelconque des revendications 1 à 13.

15. Dispositif de rééducation selon la revendication 14, **caractérisé en ce que** le bras avant (6) est monté sur le bras de base (5) de manière à pouvoir pivoter autour du deuxième axe de rotation (D2) au moyen d'une deuxième articulation (G2), la deuxième articulation (G2) étant configurée pour supporter le bras avant (6) au-dessus du bras de base (5) dans toutes les positions de pivotement du bras avant (6), et la pièce de liaison (7) étant montée sur le bras avant (6) de manière à pouvoir pivoter autour du troisième axe de rotation (D3) au moyen d'une troisième articulation (G3), la troisième articulation (G3) étant configurée pour supporter la pièce de liaison (7) au-dessus du bras avant (6) dans toutes les positions de pivotement de la pièce de liaison (7), et le support de partie de corps (8) étant monté sur la pièce de liaison (7) de manière à pouvoir basculer autour du quatrième axe de rotation (D4) au moyen d'une quatrième articulation (G4), la quatrième articulation (G4) étant configurée pour supporter le support de partie de corps (8) au-dessus du bras avant (6) dans toutes les positions de pivotement du support de partie de corps (8).
